# EUROPÄISCHE PATENTANMELDUNG

(11) **EP 3 267 565 A1**
(43) Veröffentlichungstag der Anmeldung: **10.01.2018**
(21) Anmeldenummer: 16177891.5
(22) Anmeldetag: 05.07.2016
(51) Int. Cl.: H02M 1/12, H02J 3/01

(54) **UMRICHTER UND VERFAHREN ZUM BETRIEB**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft einen Umrichter () mit einem Eingang (E) zum Anschluss an ein Wechselstrom-Netz (N), einem Netzstromrichter () zur Bereitstellung einer Gleichspannung (DC), wobei ein
- Mess-Mittel (5) dazu ausgestaltet ist Oberschwingungen (U₂, Φ₂, U₃, Φ₃, .., Uₙ, Φₙ) am Eingang (E) zu ermitteln, wobei
- den Oberschwingungen (U₂, Φ₂, U₃, Φ₃,.., Uₙ, Φₙ) zugeordnete Multiplikationsmittel (M₂, M₃, .., Mₙ) vorhanden sind, welche aus einer Oberschwingungsspannungsamplitude (U₂, U₃, .. , Uₙ) der ermittelten entsprechenden Oberschwingungen (U₂, Φ₂, U₃, Φ₃,.., Uₙ, Φₙ) jeweils einen Oberschwingungsstromsollwert (I₂, I₃,.., Iₙ) bereitstellen,
- das die Regeleinrichtung (3) weiterhin dazu ausgestaltet ist die Oberschwingungsstromsollwerte (I₂, I₃,.., Iₙ) auf den Stromsollwert (7) zu addieren um einen Gesamtstromsollwert (9) für das Transformationsmittel (8) zu erhalten,
- Transformationsmittel (8) eine angepasste Übertragungsfunktion (H(jώ_{1..n})) aufweist, welche die Oberschwingungen (U₂, Φ₂, U₃, Φ₃,.., Uₙ, Φₙ) berücksichtigt, und damit ausgestaltet ist aus dem Gesamtstromsollwert (9) für die Grundschwingung und die Oberschwingungen (U₂, Φ₂, U₃, Φ₃,.., Uₙ, Φₙ) einen korrigierten Spannungssollwert (4') als Stellgröße für den Netzstromrichter (2) bereitzustellen,
damit dem Wechselstrom-Netz (N) ein Strom entnommen wird, dessen Oberschwingungen der in Phasenlage zu den Oberschwingungen (U₂, Φ₂, U₃, Φ₃,..,Uₙ, Φₙ) des Wechselstrom-Netzes (N) liegen.

## Beschreibung

Die Erfindung betrifft einen Umrichter mit einem Eingang zum Anschluss an ein Wechselstrom-Netz, einem Netzstromrichter zur Bereitstellung einer Gleichspannung, einer Regeleinrichtung ausgestaltet auf einen Spannungssollwert der Gleichspannung des Netzstromrichters zu regeln, dabei umfasst die Regeleinrichtung ein Messmittel ausgestaltet um eine Grundschwingung am Eingang zu ermitteln, einem Umrechnungsmittel ausgestaltet aus einer Grundschwingungsamplitude und einer Grundschwingungsphasenlage einen Stromsollwert für die Grundschwingung bereitzustellen, ein Transformationsmittel mit einer Übertragungsfunktion einer Netzimpedanz des Wechselstrom-Netzes, ausgestaltet aus dem Stromsollwert für die Grundschwingung den Spannungssollwert als Stellgröße für den Netzstromrichter bereitzustellen.

Im Sinne der Erfindung soll unter Netzstromrichter, insbesondere ein aktiver Netzstromrichter verstanden werden. Aktive Netzstromrichter dienen typischerweise zum Energieaustausch zwischen einem jeweiligen AC-Netz und einen DC-Zwischenkreis. Sie sind daher von großer Bedeutung sowohl für Antriebssysteme, wobei Motor-Wechselrichter die geregelte DC-Spannung als Eingang nutzen, als auch zunehmend für die Energieerzeugung und Energiespeicherung, z.B. mit einer Batterie, im DC-Zwischenkreis.

Kennzeichnend für aktive Netzwechselrichter ist die Fähigkeit zum Wirkleistungsaustausch in beide Richtungen, also vom Netz in den Zwischenkreis zur Versorgung eines Antriebs als auch umgekehrt, um z.B. Bremsenergie oder gespeicherte Energie oder mit Photovoltaik-Modulen erzeugte Energie in das Netz zu speisen.

Aktive Netzstromrichter (AFE) besitzen die Möglichkeit, vorhandene Oberschwingungen im Netz zu kompensieren. Derartige

Geräte sind z.B. als aktive Filter bekannt. Diese messen die Oberschwingungen im Netz und speisen einen Strom ein, der diese kompensiert und im Idealfall zu Null macht.

Oberschwingungen in einem Netz werden beispielsweise durch Schaltvorgänge oder Lasten mit nichtlinearer Strom-Spannungskennlinie hervorgerufen. Schaltvorgänge wie z.B. das Zuschalten eines Verbrauchers, sind transiente Vorgänge, die sich kurzzeitig und aperiodisch auf die Netzspannung auswirken. Die Verzerrung beinhaltet somit auch Frequenzanteile, die in keinem Zusammenhang mit der Netzfrequenz stehen.

Im Gegensatz hierzu wiederholt sich die Verzerrung der Spannungsform durch nichtlineare Lasten einheitlich für jede Netzperiode, d.h. die Verzerrung beinhaltet lediglich ganzzahlige Vielfache der Netzfrequenz (harmonische). Die durch die Strom harmonisch hervorgerufenen Verzerrungen der Spannungsform stört die Funktion anderer Verbraucher, die auf eine saubere Sinusform angewiesen sind: Die Netzspannungsharmonischen führen zu erhöhter Verlustleistung oder Koppeln auf Signalgrößen über.

Zwar will man mit den aktiven Netzfiltern diese Oberschwingungen bzw. die Stromharmonischen kompensieren, aber ein Problem der aktiven Netzfilter besteht darin, dass sie als Senke für die Oberschwingungsströme wirken. Dadurch können andere angeschlossene Geräte so reagieren, dass sie ihre Störaussendungen erhöhen, so dass ein stabiler Zustand mit einem zusätzlichen Oberschwingungsstrom entsteht.

Es ist Aufgabe der vorliegenden Erfindung einen Umrichter bzw. ein Verfahren zum Betrieb des Umrichters bereitzustellen, um die Rückwirkung durch die Oberschwingungen auf andere Geräte zu minimieren.

Eine Variante das Problem zu lösen, wäre eine übergeordnete Netzregelung einzuführen. Diese müsste zentral Sollwerte an alle Verbraucher senden. Diese Lösungsvariante ist jedoch sehr aufwändig, da alle Verbraucher unterschiedlichster Hersteller und Betreiber eingebunden werden müssten.

Auf eine einfachere Weise wird die eingangs genannte Aufgabe dadurch gelöst, dass der eingangs genannte Umrichter dahingehend erweitert wird, dass das Mess-Mittel zusätzlich dazu ausgestaltet ist, Oberschwingungen am Eingang zu ermitteln, das den Oberschwingungen Multiplikationsmittel zugeordnet sind, welche aus einer Oberschwingungsamplitude der ermittelten entsprechenden Oberschwingungen jeweils einen Oberschwingungsstrom-Sollwert bereitstellen, dass die Regeleinrichtung weiterhin dazu ausgestaltet ist, die OberschwingungsstromSollwerte auf den Stromsollwert zu addieren um einen gesamten Stromsollwert für das Transformationsmittel zu erhalten, dabei weist das Transformationsmittel eine angepasste Übertragungsfunktion auf, welche die Oberschwingungen berücksichtigt, und damit ausgestaltet ist, aus dem Gesamtstromsollwert für die Grundschwingung und die Oberschwingungen einen korrigierten Spannungssollwert als Stellgröße für den Netzstromrichter bereitzustellen, damit dem Wechselstrom-Netz ein Strom entnommen wird, dessen Oberschwingungen der in Phasenlage zu den Oberschwingungen des Wechselstrom-Netzes liegen.

Mit dieser Erweiterung eines nach dem Stand der Technik bekannten Netzgleichrichters, verhält sich der Netzgleichrichter bezüglich der Oberschwingungen nun wie ein ohmscher Widerstand, er kann nun die Oberschwingungen im Netz dämpfen. Erfindungsgemäß werden Sollwerte für die Oberschwingungen zusätzlich zu dem Sollwert für die Grundschwingungen vorgegeben, wobei die Phasenlage der Sollwerte für die Oberschwingungen identisch zu der gemessenen Phasenlage der Oberschwingungen im Netz ist.

Hinsichtlich des ohmschen Verhaltens des Netzstromrichters ist es von Vorteil, wenn den Multiplikationsmitteln jeweils ein einstellbarer Widerstandswert zugeordnet ist. Mit den einstellbaren Widerstandswerten für jede Oberschwingung verhält sich der Umrichter bezüglich der Oberschwingungen wie ein ohmscher Widerstand.

Nach einer weiteren Ausgestaltung und bei Einsatz eines Netzfilters, wobei der Netzfilter zwischen dem Eingang und dem Netzstromrichter geschaltet ist, ist die Übertragungsfunktion bzw. die angepasste Übertragungsfunktion bezüglich einer Topologie des Netzfilters und/oder der Netzimpedanz zu erweitern.

Bei einem Verfahren zum Betrieb eines Umrichters mit einem Eingang zum Anschluss an einen Wechselstrom-Netz, wobei ein Netzstromrichter zur Bereitstellung einer Gleichspannung eingesetzt wird und auf einen Spannungssollwert der Gleichspannung des Netzstromrichters geregelt wird, dabei wird eine Grundschwingung am Eingang ermittelt, und aus einer Grundschwingungs-Amplitude und einer Grundschwingungs-Phasenlage der Grundschwingung wird ein Stromsollwert für die Grundschwingung bereitgestellt, mit einer Übertragungsfunktion einer Netzimpedanz des Wechselstrom-Netzes wird aus dem Stromsollwert für die Grundschwingung der Spannungssollwert als Stellgröße für den Netzstromrichter bereitgestellt, wird die eingangs genannte Aufgabe folgendermaßen gelöst. Zusätzlich werden Oberschwingungen am Eingang ermittelt, aus einer Oberschwingungsamplitude der ermittelten entsprechenden Oberschwingungen wird durch Multiplikationen mit einem ohmschen Faktor jeweils ein Oberschwingungsstromsollwert bereitgestellt, die Oberschwingungsstromsollwerte werden auf den Stromsollwert zu einen Gesamtstromsollwert aufaddiert, es wird eine angepasste Übertragungsfunktion verwendet, welche die Oberschwingungen berücksichtigt, und damit aus dem Gesamtstrom-Sollwert für die Grundschwingung und die Oberschwingungen ein korrigierter Spannungssollwert als Regelgröße für den Netzstromrichter bereitgestellt. Dadurch kann dem Wechselstrom-Netz ein Strom entnommen werden, dessen Oberschwingungen in Phasenlage zu den Oberschwingungen des Wechselstrom-Netzes liegen und damit zeigt der Umrichter bzw. der Netzstromrichter ein ohmsches Verhalten, wodurch der Umrichter bezüglich der Oberschwingungen dämpfend auf das Wechselstrom-Netz wirkt. Der Netzgleichrichter soll sich wie ein ohmscher Widerstand verhalten, er soll die Oberschwingungen im Netz dämpfen, erfindungsgemäß werden die Sollwerte für die Oberschwingungen zusätzlich zu dem Sollwert für die Grundschwingungen vorgegeben, wobei die Phasenlage der Sollwerte für die Oberschwingungen identisch zu der gemessenen Phasenlage der Oberschwingungen im Wechselstrom-Netz ist. Es wird demnach nicht auf einen rein sinusförmigen Netzstrom geregelt, sondern durchaus ist gewollt, dass der Netzstrom leicht verzerrt ist, welches aber zum Vorteil hat, dass sich der angeschlossene Umrichter bzw. Netzstromrichter dämpfend auf das Wechselstrom-Netz verhält und keine störenden Auswirkungen auf andere angeschlossene Netzstromrichter bezüglich ihrer eigenen Oberschwingungskompensation verursacht.

Vorteilhafter Weise wird den ohmschen Faktoren jeweils ein einstellbarer Widerstand zugeordnet.

In weiterer Ausgestaltung wird bei dem Verfahren bei Verwendung eines Netzfilters, die Übertragungsfunktion bzw. die angepasste Übertragungsfunktion bezüglich einer Topologie des Netzfilters erweitert.

Weiterhin ist es von Vorteil, nur die Oberschwingungen mit einer Frequenz bis zu einer Grenze von ca. 20 % einer Pulsfrequenz des Netzstromrichters zu berücksichtigen.

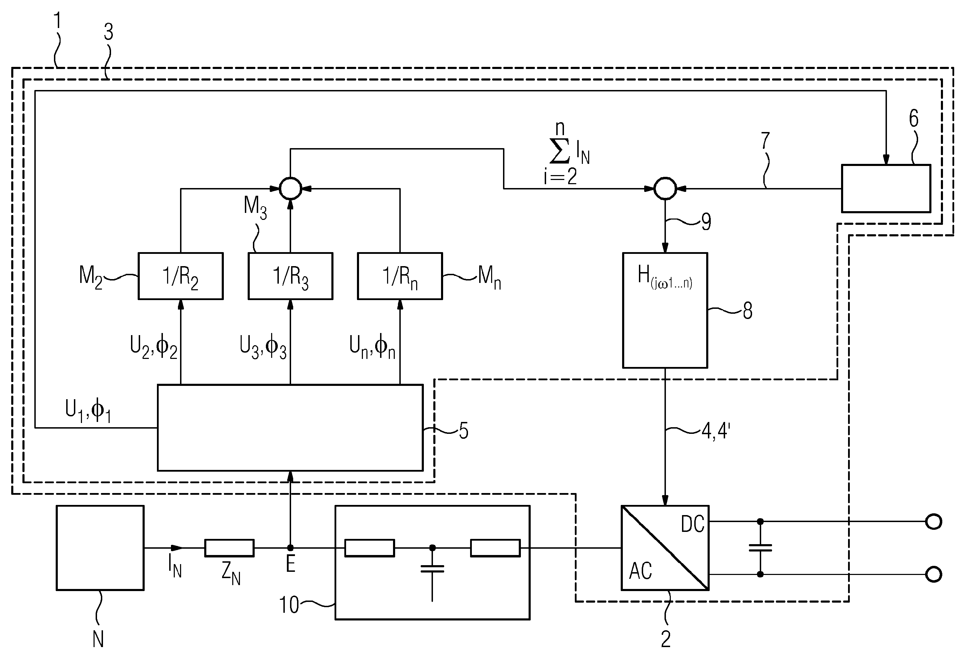

Mit der Zeichnung wird ein Ausführungsbeispiel der Erfindung gezeigt. Es zeigt die Figur einen Umrichter 1 mit einem Netzstromrichter 2 und dem erfindungsgemäß erweiterten Regelkreis.

Gemäß der Figur ist ein Umrichter 1 mit einem Eingang E zum Anschluss an ein Wechselstrom-Netz N gezeigt. Der Umrichter 1 weist einen Netzstromrichter 2 zur Bereitstellung einer Gleichspannung DC auf. Eine Regeleinrichtung 3 ist dazu ausgestaltet, auf einen Spannungssollwert 4 der Gleichspannung DC den Netzstromrichter 2 zu regeln.

Die Regeleinrichtung 3 umfasst ein Mess-Mittel 5, welches ausgestaltet ist, eine Grundschwingung U₁, Φ₁ am Eingang E zu ermitteln. Ein Umrechnungsmittel 6 ist ausgestaltet, aus einer Grundschwingungsamplitude U₁ und einer Grundschwingungsphasenlage Φ₁ unter Berücksichtigung der Gleichspannung DC einen Stromsollwert 7 für die Grundschwingung U₁, Φ₁ bereitzustellen.

Ein Transformationsmittel 8 mit einer Übertragungsfunktion H(jώ₁) einer Netzimpedanz Z_{N} des Wechselstrom-Netzes N, ist üblicherweise ausgestaltet aus dem Stromsollwert 7 für die Grundschwingung U₁, Φ₁ den Spannungssollwert 4 als Regelgröße für den Netzstromrichter 2 bereitzustellen.

Um nun aber einen Umrichter 1 bzw. einen Netzgleichrichter 2 bereitzustellen, der auf das angeschlossene Wechselstrom-Netz N bezüglich der Oberschwingungen dämpfend wirkt, und somit nicht zusätzlich angeschlossene Geräte nicht derart beeinflusst, dass sie ihre Störaussendungen bezüglich der Oberschwingungen erhöhen, ist nun das Mess-Mittel 5 zusätzlich dazu ausgestaltet, Oberschwingungen U₂, Φ₂, U₃, Φ₃,.., Uₙ, Φₙ am Eingang E zu ermitteln. Dabei werden den Oberschwingungen U₂, Φ₂, U₃, Φ₃,.., Uₙ, Φₙ zugeordnete Multiplikationsmittel M₂, M₃,..,Mₙ zugeordnet. Die mit dem Mess-Mittel 5 ermittelten Amplituden der Oberschwingungen werden mit dem Kehrwert eines vorgebbaren Widerstandswertes R₂,R₃,..,Rₙ multipliziert, wodurch man einen phasenrichtigen Oberschwingungsstromsollwert I₂, I₃,.., Iₙ erhält. Diese Oberschwingungsstromsollwerte I₂, I₃,.., Iₙ werden an einer Additionsstelle zusammengeführt und zusätzlich auf den Stromsollwert 7 der Grundschwingung U₁, Φ₁ aufaddiert. Dadurch erhält man einen Gesamtstromsollwert 9, der nun bei erfindungsgemäßer angepasster Übertragungsfunktion H(jώ_{1..n}) in das Transformationsmittel 8 eingespeist werden kann. Das Transformationsmittel 8 mit der angepassten Übertragungsfunktion H(jώ_{1..n}) kann die Oberschwingungen U₂, Φ₂, U₃, Φ₃,.., Un, Φₙ nun berücksichtigen. Das Transformationsmittel 8 stellt nun einen korrigierten Spannungssollwert 4' als Stellgröße für den Netzstromrichter 2 bereit, damit dem Wechselstrom-Netz ein Strom IN entnommen wird, der in Phasenlage zu den Oberschwingungen U₂, Φ₂, U₃, Φ₃,.., Uₙ, Φₙ des Wechselstrom-Netzes N liegt.

Da Stromrichter mit aktiver Netzeinspeisung und einem aktiven Filter meist als Senke für Oberschwingungsströme dienen, können andere angeschlossene Geräte so reagieren, dass sie ihre Störaussendungen erhöhen, so dass ein stabiler Zustand mit einem zusätzlichen Oberschwingungsstrom entsteht. Mit der vorliegenden Erfindung und der Multiplikation mit ohmschen Widerständen ist nun ein Kriterium gefunden worden um dies zu verhindern.

## Patentansprüche

1. Umrichter (1) mit einem Eingang (E) zum Anschluss an ein Wechselstrom-Netz (N), einem Netzstromrichter (2) zur Bereitstellung einer Gleichspannung (DC),
einer Regeleinrichtung (3) ausgestaltet auf einen Spannungssollwert (4) der Gleichspannung (DC) des Netzstromrichters (2) zu regeln, dabei umfasst die Regeleinrichtung (3)
- ein Mess-Mittel (5) ausgestaltet um eine Grundschwingung (U₁, Φ₁) am Eingang (E) zu ermitteln,
- ein Umrechnungsmittel (6) ausgestaltet aus einer Grundschwingungsamplitude (U₁) und einer Grundschwingungsphasenlage (Φ₁) einen Stromsollwert (7) für die Grundschwingung (U₁, (Φ₁) bereitzustellen,
- ein Transformationsmittel (8) mit einer Übertragungsfunktion (H(jώ₁)) einer Netzimpedanz (Z_{N}) des Wechselstrom-Netze (N), ausgestaltet aus dem Stromsollwert (7) für die Grundschwingung (U₁, Φ₁) den Spannungssollwert (4) als Stellgröße für den Netzstromrichter (2) bereitzustellen,
**dadurch gekennzeichnet, dass** das
- Mess-Mittel (5) zusätzlich dazu ausgestaltet ist Oberschwingungen (U₂, Φ₂, U₃, Φ₃, .., Uₙ, Φₙ) am Eingang (E) zu ermitteln,
- den Oberschwingungen (U₂, Φ₂, U₃, Φ₃,..,Uₙ, Φₙ) zugeordnete Multiplikationsmittel (M₂, M₃,..,Mₙ) vorhanden sind, welche aus einer Oberschwingungsspannungsamplitude (U₂, U₃,.., Uₙ) der ermittelten entsprechenden Oberschwingungen (U₂, Φ₂, U₃, Φ₃,..,Uₙ, Φₙ) jeweils einen Oberschwingungsstromsollwert (I₂, I₃,.., Iₙ) bereitstellen,
- das die Regeleinrichtung (3) weiterhin dazu ausgestaltet ist die Oberschwingungsstromsollwerte (I₂, I₃,..,Iₙ) auf den Stromsollwert (7) zu addieren um einen Gesamtstromsollwert (9) für das Transformationsmittel (8) zu erhalten,
- Transformationsmittel (8) eine angepasste Übertragungsfunktion (H(jώ_{1..n})) aufweist, welche die Oberschwingungen (U₂, Φ₂, U₃, Φ₃,..,Uₙ, Φₙ) berücksichtigt, und damit ausgestaltet ist aus dem Gesamtstromsollwert (9) für die Grundschwingung und die Oberschwingungen (U₂, Φ₂, U₃, Φ₃,..,Uₙ, Φₙ) einen korrigierten Spannungssollwert (4') als Stellgröße für den Netzstromrichter (2) bereitzustellen,
damit dem Wechselstrom-Netz (N) ein Strom entnommen wird, dessen Oberschwingungen in Phasenlage zu den Oberschwingungen (U₂, Φ₂, U₃, Φ₃,..,Uₙ, Φₙ) des Wechselstrom-Netzes (N) liegen.

2. Umrichter (1) nach Anspruch 1, wobei den Multiplikationsmitteln (M₂, M₃,..,Mₙ) jeweils ein einstellbarer Widerstandswert (R₂,R₃,..,Rₙ) zugeordnet ist.

3. Umrichter (1) nach Anspruch 1 oder 2, aufweisend ein zwischen dem Eingang (E) und dem Netzstromrichter (2) geschalteten Netzfilter (10), wobei die Übertragungsfunktion (H(jώ₁)) bzw. die angepasste Übertragungsfunktion (H(jώ_{1..n})) bezüglich einer Topologie des Netzfilters (10) und/oder der Netzimpedanz (Z_{N}) erweitert ist.

4. Verfahren zum Betrieb eines Umrichters (1) mit einem Eingang (E) zum Anschluss an ein Wechselstrom-Netz (N), wobei ein Netzstromrichter (2) zur Bereitstellung einer Gleichspannung (DC) eingesetzt wird und auf einen Spannungssollwert (4) der Gleichspannung (DC) des Netzstromrichters (2) geregelt wird, dabei wird
- eine Grundschwingung (U₁, Φ₁) am Eingang (E) ermittelt,
- und aus einer Grundschwingungsamplitude (U₁) und einer Grundschwingungsphasenlage (Φ₁) der Grundschwingung (U₁, Φ₁) wird ein Stromsollwert (7) für die Grundschwingung (U₁, Φ₁) bereitgestellt,
- mit einer Übertragungsfunktion (H(jώ₁)) einer Netzimpedanz (Z_{N}) des Wechselstrom-Netzes (N) wird aus dem Stromsollwert (7) für die Grundschwingung (U₁, Φ₁) der Spannungssollwert (4) als Stellgröße für den Netzstromrichter (2) bereitgestellt,
**dadurch gekennzeichnet, dass**
- zusätzlich Oberschwingungen (U₂, Φ₂, U₃, Φ₃, .., Uₙ, Φₙ) am Eingang (E) ermittelt werden,
- aus einer Oberschwingungsspannungsamplitude (U₂, U₃,.., Uₙ) der ermittelten entsprechenden Oberschwingungen (U₂,Φ₂, U₃, Φ₃,..,Uₙ, Φₙ) durch Multiplikation mit einem ohmschen Faktor jeweils ein Oberschwingungsstromsollwert (I₂, I₃,.., Iₙ) bereitgestellt wird,
- die Oberschwingungsstromsollwerte (I₂, I₃,..,Iₙ) auf den Stromsollwert (7) zu einem Gesamtstromsollwert (9) aufaddiert werden,
- eine angepasste Übertragungsfunktion (H(jώ_{1..n})) verwendet wird, welche die Oberschwingungen (U₂, Φ₂, U₃, Φ₃,.., Uₙ, Φₙ) berücksichtigt, und damit aus dem Gesamtstromsollwert () für die Grundschwingung (U₁, Φ₁) und die Oberschwingungen (U₂, Φ₂, U₃, Φ₃,..,Uₙ, Φₙ) ein korrigierter Spannungssollwert (4') als Regelgröße für den Netzstromrichter (2) bereitgestellt wird,
wodurch dem Wechselstrom-Netz (N) ein Strom (IN) entnommen wird, dessen Oberschwingungen in Phasenlage zu den Oberschwingungen (U₂, Φ₂, U₃, Φ₃,..,Uₙ, Φₙ) des Wechselstrom-Netzes (N) liegt und damit ein ohmsches Verhalten zeigen, wodurch der Umrichter (1) bezüglich der Oberschwingungen (U₂, Φ₂,..,Uₙ, Φₙ) dämpfend auf das Wechselstrom-Netz (N) wirkt.

5. Verfahren nach Anspruch 4, wobei den ohmschen Faktoren jeweils ein einstellbarer Widerstandswert (R₂,R₃,..,Rₙ) zugeordnet wird.

6. Verfahren nach Anspruch 4 oder 5, wobei bei Verwendung eines Netzfilters (10), die Übertragungsfunktion (H(jώ₁)) bzw. die angepasste Übertragungsfunktion (H(jώ_{1..n})) bezüglich einer Topologie des Netzfilters (10) erweitert wird.

7. Verfahren nach einem der Ansprüche 4 bis 5, wobei Oberschwingungen (U₂, Φ₂,..,Uₙ, Φₙ) mit einer Frequenz bis zu einer Grenze von ca. 20% einer Pulsfrequenz des Netzstromrichters () berücksichtig werden.
